# EUROPEAN PATENT APPLICATION

(11) **EP 4 703 405 A1**
(43) Date of publication of application: **04.03.2026**
(21) Application number: 24796589.0
(22) Date of filing: 08.03.2024
(51) Int. Cl.: C08G 65/336, C08G 65/10, C08K 5/5415, C08L 71/02, C09J 11/06, C09J 171/02, C09K 3/10

(54) **CRYSTALLINE POLYOXYALKYLENE-BASED POLYMER AND CURABLE COMPOSITION COMPRISING SAME**

(30) Priority: 27.04.2023 JP 2023073842
(71) Applicant: Kaneka Corporation, Osaka-shi, Osaka 530-8288 (JP)
(72) Inventor: SAITO, Takahiro, Takasago-shi, Hyogo 676-8688 (JP); TANAKA, Hidenori, Settsu-shi, Osaka 566-0072 (JP)
(74) Representative: Vossius & Partner Patentanwälte Rechtsanwälte mbB
(86) International application number: PCT/JP2024/008926
(87) International publication number: WO 2024/224831

(57) **Abstract**

Provided are: a polyoxyalkylene-based polymer that makes it possible to provide a cured product which has an excellent elastic modulus and excellent strength; and a curable composition that contains the polyoxyalkylene-based polymer. A polyoxyalkylene-based polymer (A) in accordance with an aspect of the present invention has a reactive silicon group and is crystalline. A curable composition in accordance with an aspect of the present invention contains the polyoxyalkylene-based polymer (A).

## Description

### Technical Field

The present invention relates to a crystalline polyoxyalkylene-based polymer and a curable composition containing the crystalline polyoxyalkylene-based polymer.

### Background Art

It is known that a rubber-like cured product is obtained from a polymer having at least one reactive silicon group in a molecule. This is because a reactive silicon group is, for example, hydrolyzed by moisture to form a crosslinked network of a siloxane bond. Such a reaction proceeds at room temperature.

Examples of a main chain structure of such a polymer include polyoxyalkylene, polyacrylic ester, and polyisobutylene. These polymers are already industrially produced and are widely used in applications such as sealing materials, adhesive agents, coating materials, and waterproofing materials (see Patent Literatures 1 to 4).

In particular, a polymer the main chain structure of which is polyoxyalkylene has a wide application range. This is because such a polymer is easy to handle due to its relatively low viscosity at room temperature or a resulting cured product has good mechanical properties.

### Citation List

### [Patent Literature]

[Patent Literature 1]
   Japanese Patent Application Publication Tokukaisho No. 52-073998
[Patent Literature 2]
   Japanese Patent Application Publication Tokukaisho No. 63-006041
[Patent Literature 3]
   Japanese Patent Application Publication Tokukaisho No. 55-009669
[Patent Literature 4]
   Japanese Patent Application Publication Tokukai No. 2003-206410

### Summary of Invention

### Technical Problem

However, such a conventional technique as described earlier has room for improvement in terms of an elastic modulus and strength of a resulting cured product.

An aspect of the present invention has an object to provide: a polyoxyalkylene-based polymer that makes it possible to provide a cured product which has an excellent elastic modulus and excellent strength; and a curable composition that contains the polyoxyalkylene-based polymer.

### Solution to Problem

The inventors of the present invention carried out diligent studies in order to attain the object. As a result, the inventors of the present invention found that the object can be attained by causing a polyoxyalkylene-based polymer having a reactive silicon group to be a crystalline polymer.

A crystalline polyoxyalkylene-based polymer (A) in accordance with an aspect of the present invention has a reactive silicon group indicated in general formula (1):

-Si(R¹)₃₋ₐ(X)ₐ (1)

where:
each R¹ independently represents a hydrocarbon group that may have a substituent, the hydrocarbon group having 1 to 20 carbon atoms;
the substituent may have a hetero atom;
each X is independently a hydroxy group or a hydrolyzable group; and
"a" is 1, 2, or 3.

A curable composition in accordance with an aspect of the present invention contains a crystalline polyoxyalkylene-based polymer (A) and a silanol condensation catalyst (B).

### Advantageous Effects of Invention

An aspect of the present invention provides: a polyoxyalkylene-based polymer that makes it possible to provide a cured product which has an excellent elastic modulus and excellent strength; and a curable composition that contains the polyoxyalkylene-based polymer.

### Description of Embodiments

The following description will discuss embodiments of the present invention. The present invention is not, however, limited to these embodiments.

### [1. Crystalline polyoxyalkylene-based polymer (A)]

### [1.1. Structure and properties of crystalline polyoxyalkylene-based polymer (A)]

A crystalline polyoxyalkylene-based polymer (A) in accordance with an aspect of the present invention has a reactive silicon group indicated in general formula (1). The reactive silicon group is a functional group that forms a siloxane bond by a chemical reaction such as hydrolysis.

-Si(R¹)₃₋ₐ(X)ₐ (1)

where: each R¹ independently represents a hydrocarbon group that may have a substituent, the hydrocarbon group having 1 to 20 carbon atoms; the substituent may have a hetero atom; each X is independently a hydroxy group or a hydrolyzable group; and "a" is 1, 2, or 3.

R¹ is a hydrocarbon group having 1 to 20 carbon atoms. The number of carbon atoms of R¹ is preferably 1 to 12, more preferably 1 to 6, and even more preferably 1 to 4. The hydrocarbon group may be an unsubstituted hydrocarbon group or may be a hydrocarbon group having a substituent.

The substituent may have a hetero atom. The hetero atom refers to a type of atom other than a carbon atom and a hydrogen atom. Suitable examples of the hetero atom include N, O, S, P, Si, and halogen atoms (F, Cl, B, I, and the like). In the present specification, a substituent having a hetero atom is referred to as a hetero atom-containing substituent. In the hetero atom-containing substituent, the total of the number of carbon atoms and the number of hetero atoms is preferably 1 to 10, more preferably 1 to 6, and even more preferably 1 to 4.

Suitable examples of the hetero atom-containing substituent include: hydroxy groups; mercapto groups; halogen atoms (such as Cl, Br, I, and F); nitro groups; cyano groups; alkoxy groups (such as methoxy groups, ethoxy groups, n-propyloxy groups, and isopropyloxy groups); alkylthio groups (such as methylthio groups, ethylthio groups, n-propylthio groups, and isopropylthio groups); acyl groups (such as acetyl groups, propionyl groups, and butanoyl groups); acyloxy groups (such as acetyloxy groups, propionyloxy groups, and butanoyloxy groups); substituted or unsubstituted amino groups (such as amino groups, methylamino groups, ethylamino groups, dimethylamino groups, and diethylamino groups); and substituted or unsubstituted aminocarbonyl groups (such as aminocarbonyl groups, methylaminocarbonyl groups, ethylaminocarbonyl groups, dimethylaminocarbonyl groups, and diethylaminocarbonyl groups).

In a case where R¹ has the hetero atom-containing substituent, the total of the number of carbon atoms and the number of hetero atoms in R¹ as a whole is preferably 2 to 30, more preferably 2 to 18, even more preferably 2 to 10, and particularly preferably 2 to 6.

Specific examples of R¹ include: alkyl groups (such as methyl groups, ethyl groups, n-propyl groups, isopropyl groups, n-butyl groups, isobutyl groups, sec-butyl groups, tert-butyl groups, n-pentyl groups, n-hexyl groups, n-heptyl groups, n-octyl groups, 2-ethyl-n-hexyl groups, n-nonyl groups, n-decyl groups, n-undecyl groups, n-dodecyl groups, n-tridecyl groups, n-tetradecyl groups, n-pentadecyl groups, n-hexadecyl groups, n-octadecyl groups, n-nonadesilyl groups, and n-icosyl groups); alkenyl groups (such as vinyl groups, 2-propenyl groups, 3-butenyl groups, and 4-pentenyl groups); cycloalkyl groups (such as cyclopropyl groups, cyclobutyl groups, cyclopentyl groups, cyclohexyl groups, cycloheptyl groups, and cyclooctyl groups); aryl groups (such as phenyl groups, naphthalene-1-yl groups, naphthalene-2-yl groups, o-phenylphenyl groups, m-phenylphenyl groups, and p-phenylphenyl groups); and aralkyl groups (such as benzyl groups, phenethyl groups, naphthalene-1-ylmethyl groups, and naphthalene-2-ylmethyl groups).

Groups in which one or more hydrogen atoms contained in these hydrocarbon groups are substituted with the above-listed hetero atom-containing substituents are also preferable as R¹.

Suitable examples of R¹ include: alkyl groups (such as methyl groups and ethyl groups); alkyl groups having hetero atom-containing substituents (such as chloromethyl groups and methoxymethyl groups); cycloalkyl groups (such as cyclohexyl groups); aryl groups (such as phenyl groups); and aralkyl groups (such as benzyl groups). Each R¹ is preferably independently selected from the group consisting of a methyl group, a methoxymethyl group, and a chloromethyl group. Each R¹ is more preferably independently selected from the group consisting of a methyl group and a methoxymethyl group. R¹ is even more preferably a methyl group.

"a" is 1, 2, or 3. "a" is preferably 2 or 3. "a" is more preferably 3 in order to achieve a curable composition with good curability and a cured product with good strength.

X is a hydroxy group or a hydrolyzable group. Examples of the hydrolyzable group include a halogen atom, an alkoxy group, an acyloxy group, a ketoximate group, an amino group, an amide group, an acid amide group, an aminooxy group, a mercapto group, and an alkenyloxy group. Among the examples listed above, an alkoxy group is preferable because of having mild hydrolyzability and being easy to handle. An alkoxy group is preferably independently selected from a methoxy group and an ethoxy group and is more preferably a methoxy group.

Specific examples of the reactive silicon group represented by formula (1) include a trimethoxysilyl group, a triethoxysilyl group, a tris(2-propenyloxy)silyl group, a triacetoxysilyl group, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, an (N,N-diethylaminomethyl)dimethoxysilyl group, and an (N,N-diethylaminomethyl)diethoxysilyl group. In terms of mechanical properties of the cured product, a dimethoxymethylsilyl group, a trimethoxysilyl group, a triethoxysilyl group, and a (methoxymethyl)dimethoxysilyl group are preferable. In terms of activity of the reactive silicon group, a trimethoxysilyl group, a (chloromethyl)dimethoxysilyl group, and a (methoxymethyl)dimethoxysilyl group are preferable, and a trimethoxysilyl group is more preferable.

A main chain of the crystalline polyoxyalkylene-based polymer (A) has a repeating unit represented by -R³-O-. R³ is a branched bivalent alkylene group having 1 to 14 carbon atoms. Specific examples of the repeating unit represented by -R³-O- include -CH₂CH(CH₃)O-, -CH₂CH(C₂H₅)O-, - CH₂CH(CH=CH₂)O-, -CH₂CH(C₆H₅)O-, -CH₂CH(C₆H₄CH₃)O-, - CH₂CH(CH₂F)O-, -CH₂CH(CH₂Cl)O-, -CH₂CH(CH₂Br)O-, - CH₂CH(CH₂OH)O-, -CH₂CH(CH₂OC₄H₉)O-, - CH₂CH(CH₂OC₆H₁₃)O-, -CH₂CH(CH₂OCH₂CH=CH₂)O-, - CH₂CH(CH₂OC₆H₅)O-, -CH₂CH(CH₂OCH₂CH₂Cl)O-, and - CH₂CH(C₆H₄Cl)O-. Among the examples listed above, one or more selected from -CH₂CH(CH₃)O-, -CH₂CH(C₂H₅)O-, and - CH₂CH(C₆H₅)O- is preferable, and -CH₂CH(CH₃)O- is more preferable. In an embodiment, the polyoxyalkylene-based polymer (A) is a polyoxypropylene-based polymer.

The repeating unit represented by -R³-O- accounts for preferably not less than 50%, more preferably not less than 70%, and even more preferably not less than 90% of all repeating units constituting the main chain of the crystalline polyoxyalkylene-based polymer (A). The main chain of the crystalline polyoxyalkylene-based polymer (A) may have two or more types of the repeating unit represented by -R³-O-. In an embodiment, the repeating unit represented by - CH₂CH(CH₃)O- accounts for not less than 50%, not less than 70%, or not less than 90% of all the repeating units constituting the main chain of the crystalline polyoxyalkylene-based polymer (A).

Crystallinity of a polyoxyalkylene-based polymer is determined by isotacticity of a main chain. Specifically, a polyoxyalkylene polymer having a high mm-triad content can be said to be crystalline (in the present specification, "m" of "mm-triad" represents "meso"). In a case where a polyoxyalkylene-based polymer is a polyoxypropylene-based polymer, the mm-triad content thereof can be calculated by a method disclosed in J. AM. CHEM. SOC., vol. 127, pp. 11566-11567 (2005).

The mm-triad content of the crystalline polyoxyalkylene-based polymer (A) is preferably not less than 5%, more preferably not less than 25%, even more preferably not less than 50%, and particularly preferably not less than 75%, in terms of an elastic modulus and strength of a cured product.

An isotactic structure of the crystalline polyoxyalkylene-based polymer (A) may be distributed in any part of the main chain. The isotactic structure and an atactic structure may be randomly distributed in the main chain. Alternatively, the isotactic structure and the atactic structure may form a block (such as an isotactic structure-atactic structure-isotactic structure or an atactic structure-isotactic structure-atactic structure). By thus forming the block, a resulting cured product sometimes exhibits more excellent mechanical properties.

The main chain of the crystalline polyoxyalkylene-based polymer (A) may be linear or branched.

The number average molecular weight of the crystalline polyoxyalkylene-based polymer (A) is not particularly limited. The lower limit of the number average molecular weight is preferably not less than 1,000, more preferably not less than 2,000, and even more preferably not less than 3,000. The upper limit of the number average molecular weight is preferably not more than 500,000, more preferably not more than 400,000, and even more preferably not more than 300,000. The number average molecular weight of the crystalline polyoxyalkylene-based polymer (A) is determined as a polystyrene equivalent molecular weight as measured by GPC. The number average molecular weight that is in the foregoing range makes it possible to easily produce the crystalline polyoxyalkylene-based polymer (A) and does not excessively increase production cost. The number average molecular weight that is in the foregoing range also makes it possible to obtain a cured product which has a high elastic modulus and high strength.

The molecular weight distribution (Mw/Mn) of the crystalline polyoxyalkylene-based polymer (A) is not particularly limited, but it is commonly considered that the molecular weight distribution preferably has a smaller numerical value. The molecular weight distribution is preferably not more than 3.5, more preferably not more than 3.0, even more preferably not more than 2.5, and particularly preferably not more than 2.0.

Only one type of the crystalline polyoxyalkylene-based polymer (A) may be used, or two or more different types of the crystalline polyoxyalkylene-based polymer (A) may be used in combination.

### [1.2. Method for producing crystalline polyoxyalkylene-based polymer (A)]

Examples of a method for polymerizing the main chain of the crystalline polyoxyalkylene-based polymer (A) include methods disclosed in J. AM. CHEM. SOC., vol. 127, pp. 11566-11567 (2005), J. AM. CHEM. SOC., vol. 130, pp. 17658-17659 (2008), CHEM. REV., vol. 114, pp. 8129-8152 (2014), and J. AM. CHEM. SOC., vol. 139, pp. 11048-11054 (2017). In a case where a resulting crystalline polyoxyalkylene-based polymer does not have a hydroxy group at a terminal thereof, conversion to a hydroxy group is preferable in order to introduce a reactive silicon group.

### (Reactive silicon group introduction method 1)

Using a hydroxy group at a terminal of a polyoxyalkylene-based polymer makes it possible to introduce a reactive silicon group. For example, the reactive silicon group can be introduced by the following first process.
1. An alkali metal salt or a double metal cyanide complex catalyst is caused to act on a hydroxy group-terminated polyoxyalkylene-based polymer. Thus, a metaloxy group-terminated polyoxyalkylene-based polymer is obtained.
2. An electrophile having a carbon-carbon unsaturated bond is caused to act on the metaloxy group-terminated polyoxyalkylene-based polymer. Thus, a polyoxyalkylene-based polymer having a carbon-carbon unsaturated bond in a terminal part thereof is obtained.
3. A reactive silicon group-containing compound that reacts with a carbon-carbon unsaturated bond is caused to act on the polyoxyalkylene-based polymer having a carbon-carbon unsaturated bond in a terminal part thereof. Thus, a polyoxyalkylene-based polymer having a reactive silicon group in a terminal part thereof is obtained.

The alkali metal salt in step 1 is not particularly limited. Examples of the alkali metal salt include sodium hydroxide, sodium alkoxide, potassium hydroxide, potassium alkoxide, lithium hydroxide, lithium alkoxide, cesium hydroxide, and cesium alkoxide. Among the examples listed above, sodium hydroxide, sodium methoxide, sodium ethoxide, sodium tert-butoxide, potassium hydroxide, potassium methoxide, potassium ethoxide, potassium tert-butoxide are preferable, and sodium methoxide and sodium tert-butoxide are more preferable, in terms of ease of handling and solubility. Further, sodium methoxide is preferable in terms of availability. An alkali metal salt in a state of being dissolved in a solvent may be used for a reaction.

The electrophile having a carbon-carbon unsaturated bond in step 2 is not particularly limited. Examples of the electrophile having a carbon-carbon unsaturated bond include an organohalide having a carbon-carbon unsaturated bond and an epoxy compound having a carbon-carbon unsaturated bond.

An organohalide having a carbon-carbon unsaturated bond and a metaloxy group form an ether bond by a halogen substitution reaction. Thus, the carbon-carbon unsaturated bond is introduced into the terminal part of the polyoxyalkylene-based polymer.

Specific examples of the organohalide having a carbon-carbon unsaturated bond include vinyl chloride, allyl chloride, methallyl chloride, vinyl bromide, allyl bromide, methallyl bromide, vinyl iodide, allyl iodide, and methallyl iodide. Among the examples listed above, allyl chloride and methallyl chloride are preferable because of being easy to handle. Further, methallyl chloride, methallyl bromide, and methallyl iodide are preferable because the average number of reactive silicon groups introduced relative to the number of terminals of the main chain of the polyoxyalkylene-based polymer is increased.

The organohalide having a carbon-carbon unsaturated bond may be a halogenated hydrocarbon compound having a carbon-carbon triple bond. Using such an electrophile in step 2 makes it possible to obtain a polyoxyalkylene-based polymer having a carbon-carbon triple bond in a terminal part thereof. Introducing a reactive silicon group into the polyoxyalkylene-based polymer having a carbon-carbon triple bond in a terminal part thereof makes it possible to obtain a polyoxyalkylene-based polymer having a carbon-carbon double bond so as to be adjacent to the reactive silicon group.

Examples of the halogenated hydrocarbon compound having a carbon-carbon triple bond include propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Among the examples listed above, propargyl chloride, propargyl bromide, and propargyl iodide are preferable.

As the organohalide having a carbon-carbon unsaturated bond, a halogenated hydrocarbon compound having a carbon-carbon triple bond and a halogenated hydrocarbon compound having a carbon-carbon double bond may be used in combination.

An epoxy compound having a carbon-carbon unsaturated bond and a metaloxy group form an ether bond by an epoxy group ring-opening addition reaction. Thus, a polyoxyalkylene-based polymer having both a carbon-carbon unsaturated bond and a metaloxy group in a terminal part thereof is obtained. Adjusting, in the ring-opening addition reaction, the amount of the epoxy compound used relative to the metaloxy group or reaction conditions makes it possible to add, to one metaloxy group, at least one epoxy compound having a carbon-carbon unsaturated bond.

The epoxy compound having a carbon-carbon unsaturated bond is not particularly limited. In terms of reaction activity, allyl glycidyl ether, methallyl glycidyl ether, glycidyl acrylate, glycidyl methacrylate, and butadiene monoxide are preferable, and allyl glycidyl ether is more preferable.

As described earlier, in a case where the metaloxy group-terminated polyoxyalkylene-based polymer is caused to act on the epoxy compound having a carbon-carbon unsaturated bond, a metaloxy group is newly generated in a terminal part of the polyoxyalkylene-based polymer. Thus, after the epoxy compound having a carbon-carbon unsaturated bond is caused to act, the organohalide having a carbon-carbon unsaturated bond may be subsequently caused to act.

In step 3, the polyoxyalkylene-based polymer having a carbon-carbon unsaturated bond in a terminal part thereof and a hydrosilane compound having a reactive silicon group are preferably subjected to a hydroxylation reaction. Examples of an advantage of using the hydrosilylation reaction include an advantage of making it possible to easily cause a reaction, making it easy to adjust the amount of reactive silicon groups introduced, and achieving stable physical properties of a resulting polymer.

Specific examples of the hydrosilane compound having a reactive silicon group include halosilane, alkoxysilane, acyloxysilane, ketoximatesilane, and isopropenyloxysilane (deacetone type). Examples of the halosilane include trichlorosilane, dichloromethylsilane, chlorodimethylsilane dichlorophenylsilane, (chloromethyl)dichlorosilane, (dichloromethyl)dichlorosilane, bis(chloromethyl)chlorosilane, (methoxymethyl)dichlorosilane, (dimethoxymethyl)dichlorosilane, and bis(methoxymethyl)chlorosilane. Examples of the alkoxysilane include trimethoxysilane, triethoxysilane, dimethoxymethylsilane, diethoxymethylsilane, dimethoxyphenylsilane, ethyldimethoxysilane, methoxydimethylsilane, ethoxydimethylsilane (chloromethyl) methylmethoxysilane, (chloromethyl)dimethoxysilane, (chloromethyl)diethoxysilane, bis(chloromethyl)methoxysilane, (methoxymethyl)methylmethoxysilane, (methoxymethyl)dimethoxysilane, bis(methoxymethyl)methoxysilane, (methoxymethyl)diethoxysilane, (ethoxymethyl)diethoxysilane, (3,3,3-trifluoropropyl)dimethoxysilane, (N,N-diethylaminomethyl)dimethoxysilane, (N,N-diethylaminomethyl)diethoxysilane, [(chloromethyl)dimethoxy silyloxy]dimethylsilane, [(chloromethyl)diethoxy silyloxy]dimethylsilane, [(methoxymethyl)dimethoxy silyloxy]dimethylsilane, [(methoxymethyl)diethoxy silyloxy]dimethylsilane, [(diethylaminomethyl)dimethoxy silyloxy]dimethylsilane, and [(3,3,3-trifluoropropyl)dimethoxy silyloxy]dimethylsilane. Examples of the acyloxysilane include diacetoxymethylsilane and diacetoxyphenylsilane. Examples of the ketoximatesilane include bis(dimethylketoximate)methylsilane and bis(cyclohexylketoximate)methylsilane. Examples of isopropenyloxysilanes (deacetone type) include triisopropenyloxysilane, (chloromethyl)diisopropenyloxysilane, and (methoxymethyl)diisopropenyloxysilane.

The hydrosilylation reaction in step 3 is preferably carried out in the presence of a hydrosilylation catalyst. Examples of the hydrosilylation catalyst include metals such as cobalt, nickel, iridium, platinum, palladium, rhodium, and ruthenium, and complexes thereof. More specific examples of the hydrosilylation catalyst include: a catalyst obtained by causing platinum to be supported on a carrier such as alumina, silica, or carbon black; chloroplatinic acid; a chloroplatinic acid complex composed of chloroplatinic acid and alcohol, aldehyde, ketone, or the like; a platinum-olefin complex (such as Pt(CH₂=CH₂)₂(PPh₃) or Pt(CH₂=CH₂)₂Cl₂); a platinum-vinylsiloxane complex (such as Pt{(vinyl)Me₂SiOSiMe₂(vinyl)} or Pt{Me(vinyl)SiO}₄); a platinum-phosphine complex (such as Ph(PPh₃)₄, Pt(PBu₃)₄); and a platinum-phosphite complex (such as Pt{P(OPh)₃}₄). In terms of reaction efficiency, a platinum catalyst is preferable, and chloroplatinic acid and a platinum-vinylsiloxane complex are more preferable.

### (Reactive silicon group introduction method 2)

Examples of a second process for introducing a reactive silicon group into a hydroxy group at a terminal of a crystalline polyoxyalkylene-based polymer include the following.
1. A compound having both a reactive silicon group and an isocyanate group is caused to act on a hydroxy group-terminated polyoxyalkylene-based polymer. Thus, the reactive silicon group is introduced via a urethane bond.

The compound having both a reactive silicon group and an isocyanate group is not particularly limited. Specific examples of such a compound include (3-isocyanatepropyl)trimethoxysilane, (3-isocyanatepropyl)dimethoxymethylsilane, (3-isocyanatepropyl)triethoxysilane, (3-isocyanatepropyl)diethoxymethylsilane, (isocyanatemethyl)trimethoxysilane, (isocyanatemethyl)triethoxysilane, (isocyanatemethyl)dimethoxymethylsilane, and (isocyanatemethyl)diethoxymethylsilane.

A urethanation reaction in step 1 may be carried out in the presence of a urethanation catalyst. The urethanation catalyst can be a conventionally known urethanation catalyst (such as a catalyst listed in Polyurethanes: Chemistry and Technology, Part I, Table 30, Chapter 4, Saunders and Frisch, Interscience Publishers, New York, 1963). Specific examples of the urethanation catalyst include organotin compounds, bismuth compounds, and base catalysts (such as an organic amine).

### (Reactive silicon group introduction method 3)

Examples of a third process for introducing a reactive silicon group into a hydroxy group at a terminal of a crystalline polyoxyalkylene-based polymer include the following.
1. An excess of a polyisocyanate compound is reacted with a hydroxy group-terminated polyoxyalkylene-based polymer. Thus, an isocyanate-terminated polymer is obtained.
2. A compound having both an isocyanate group-reactive group (such as an amino group) and a reactive silicon group is caused to act on the isocyanate-terminated polymer.

Examples of the polyisocyanate compound in step 1 include aliphatic polyisocyanates; aromatic polyisocyanates (such as toluene (tolylene) diisocyanate, diphenylmethane diisocyanate, and xylylene diisocyanate); and isophorone diisocyanate and hexamethylene diisocyanate.

Examples of the compound having both an isocyanate group-reactive group and a reactive silicon group in step 2 include amino group-containing silane, hydroxy group-containing silane, and mercapto group-containing silane. Examples of the amino group-containing silane include γ-aminopropyltrimethoxysilane, γ-aminopropyldimethoxymethylsilane, γ-aminopropyltriethoxysilane, N-(β-aminoethyl)-γ-aminopropyltrimethoxysilane, N-(β-aminoethyl)-γ-aminopropyldimethoxymethylsilane, N-(β-aminoethyl)-γ-aminopropyltriethoxysilane, γ-(N-phenyl)aminopropyltrimethoxysilane, γ-(N-phenyl)aminopropyldimethoxymethylsilane, N-ethylaminoisobutyltrimethoxysilane, N-ethylaminoisobutyldimethoxymethylsilane, N-cyclohexylaminomethyltrimethoxysilane, and N-cyclohexylaminomethyldimethoxymethylsilane. Examples of the hydroxy group-containing silane include γ-hydroxypropyltrimethoxysilane and γ-hydroxypropyldimethoxymethylsilane. Examples of the mercapto group-containing silane include γ-mercaptopropyltrimethoxysilane and γ-mercaptopropyldimethoxymethylsilane.

### (Reactive silicon group introduction method 4)

Examples of a fourth process for introducing a reactive silicon group into a hydroxy group at a terminal of a crystalline polyoxyalkylene-based polymer include the following.
1. An alkali metal salt or a double metal cyanide complex catalyst is caused to act on a hydroxy group-terminated polyoxyalkylene-based polymer. Thus, a metaloxy group-terminated polyoxyalkylene-based polymer is obtained.
2. An electrophile having a carbon-carbon unsaturated bond is caused to act on the metaloxy group-terminated polyoxyalkylene-based polymer. Thus, a polyoxyalkylene-based polymer having a carbon-carbon unsaturated bond in a terminal part thereof is obtained.
3. A compound having both a mercaptan group and a reactive silicon group is caused to act on a polyoxyalkylene-based polymer having a carbon-carbon unsaturated bond in a terminal part thereof. Thus, the reactive silicon group is introduced via a sulfide bond.

### Steps 1 and 2 are as described in (Reactive silicon group introduction method 1).

Examples of the compound having both a mercaptan group and a reactive silicon group in step 3 include (3-mercaptopropyl) methyldimethoxysilane, (3-mercaptopropyl)trimethoxysilane, (3-mercaptopropyl) methyldiethoxysilane, (3-mercaptopropyl)triethoxysilane, (mercaptomethyl)methyldimethoxysilane, (mercaptomethyl) trimethoxysilane, (mercaptomethyl) methyldiethoxysilane, and (mercaptomethyl) triethoxysilane.

In step 3, a reaction of addition of the mercaptan group to the carbon-carbon unsaturated bond may be carried out in the presence of a radical initiator. The radical initiator can be a conventionally known radical initiator. Specific examples of the radical initiator include an azo-based initiator and a peroxide-based initiator. In particular, a catalyst having low activity against a reactive silicon group is preferable. From this viewpoint, an azo-based initiator is preferable. Examples of the azo-based initiator include 2,2'-azobis(isobutyronitrile) (AIBN), 2,2'-azobis(2-methylbutyronitrile) (V-59), and 2,2'-azobis(1-methylcyclohexanecarbonitrile) (V-40).

### [2. Curable composition]

A curable composition in accordance with an aspect of the present invention contains a crystalline polyoxyalkylene-based polymer (A) and a silanol condensation catalyst (B). The curable composition may further contain at least one optional component selected from the group consisting of an amorphous polyoxyalkylene-based polymer (C), a silane coupling agent (D), and a (meth)acrylic ester-based polymer (E) having a reactive silicon group. The crystalline polyoxyalkylene-based polymer (A) is as described in the section [1. Crystalline polyoxyalkylene-based polymer (A)]. The present section will discuss other components in detail.

### [2.1. Silanol condensation catalyst (B)]

Examples of the silanol condensation catalyst (B) include an organotin compound, a carboxylic acid metal salt, an amine compound, a carboxylic acid, an alkoxy metal, and a titanium compound.

Examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin oxide, a reaction product of dibutyltin oxide and a silicate compound, a reaction product of dioctyltin oxide and a silicate compound, and a reaction product of dibutyltin oxide and phthalate ester.

Examples of the carboxylic acid metal salt include tin carboxylate, bismuth carboxylate, titanium carboxylate, zirconium carboxylate, iron carboxylate, potassium carboxylate, and calcium carboxylate. Examples of carboxylic acid contained in the carboxylic acid metal salt include 2-ethylhexanoic acid, neodecanoic acid, oleic acid, and naphthenic acid. Examples of metal contained in the carboxylic acid metal salt include tin, bismuth, iron, titanium, vanadium, calcium, potassium, barium, manganese, nickel, cobalt, and zirconium. Specific examples of the carboxylic acid metal salt include iron 2-ethylhexanoate (bivalent), iron 2-ethylhexanoate (trivalent), titanium 2-ethylhexanoate (tetravalent), vanadium 2-ethylhexanoate (trivalent), calcium 2-ethylhexanoate (bivalent), potassium 2-ethylhexanoate (monovalent), barium 2-ethylhexanoate (bivalent), manganese 2-ethylhexanoate (bivalent), nickel 2-ethylhexanoate (bivalent), cobalt 2-ethylhexanoate (bivalent), zirconium 2-ethylhexanoate (tetravalent), iron neodecanoate (bivalent), iron neodecanoate (trivalent), titanium neodecanoate (tetravalent), vanadium neodecanoate (trivalent), calcium neodecanoate (bivalent), potassium neodecanoate (monovalent), barium neodecanoate (bivalent), zirconium neodecanoate (tetravalent), iron oleate (bivalent), iron oleate (trivalent), titanium oleate (tetravalent), vanadium oleate (trivalent), calcium oleate (bivalent), potassium oleate (monovalent), barium oleate (bivalent), manganese oleate (bivalent), nickel oleate (bivalent), cobalt oleate (bivalent), zirconium oleate (tetravalent), iron naphthenate (bivalent), iron naphthenate (trivalent), titanium naphthenate (tetravalent), vanadium naphthenate (trivalent), calcium naphthenate (bivalent), potassium naphthenate (monovalent), barium naphthenate (bivalent), manganese naphthenate (bivalent), nickel naphthenate (bivalent), cobalt naphthenate (bivalent), and zirconium naphthenate (tetravalent).

Examples of the amine compound include: amines (such as octylamine, 2-ethylhexylamine, laurylamine, and stearylamine); nitrogen-containing heterocyclic compounds (such as pyridine, 1,8-diazabicyclo[5,4,0]undecene-7 (DBU), and 1,5-diazabicyclo[4,3,0]nonene-5 (DBN)); guanidines (such as guanidine, phenylguanidine, and diphenylguanidine); biguanides (such as butylbiguanide, 1-o-tolylbiguanide, and 1-phenylbiguanide); amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Examples of the alkoxy metal include aluminum compounds (such as aluminum tris(acetylacetonate) and diisopropoxyaluminum ethyl acetoacetate) and zirconium compounds (such as zirconium tetrakis(acetylacetonate)).

Examples of the titanium compound include tetrabutyltitanate, tetrapropyl titanate, titanium tetrakis(acetylacetonate), bis(acetylacetonate)diisopropoxytitanium, and diisopropoxytitanium bis(ethylacetocetate).

Examples of the silanol condensation catalyst (B) other than those listed earlier include a fluorine anion-containing compound, a photoacid generator, a photobase generator, and a thermal base generator.

Only one type of the silanol condensation catalyst (B) may be used, or two or more different types of the silanol condensation catalyst (B) may be used in combination.

The lower limit of the amount of the silanol condensation catalyst (B) contained in the curable composition is preferably not less than 0.001 parts by weight, and more preferably not less than 0.01 parts by weight, where the total content of hydrolyzable silyl group-containing polymers is 100 parts by weight. The upper limit of the amount of the silanol condensation catalyst (B) contained in the curable composition is preferably not more than 20 parts by weight, more preferably not more than 15 parts by weight, and even more preferably not more than 10 parts by weight, where the total content of hydrolyzable silyl group-containing polymers is 100 parts by weight. In an embodiment, the total content of hydrolyzable silyl group-containing polymers is the total content of (i) the crystalline polyoxyalkylene-based polymer (A) and (ii) the amorphous polyoxyalkylene-based polymer (C) and the (meth)acrylic ester-based polymer (E) that are optionally contained. In a case where the curable composition contains a hydrolyzable silyl group-containing polymer other than these polymers, the total content of hydrolyzable silyl group-containing polymers also includes the content of such a polymer.

### [2.2. Amorphous polyoxyalkylene-based polymer (C)]

The mm-triad content of the amorphous polyoxyalkylene-based polymer (C) is preferably less than 5%.

The amorphous polyoxyalkylene-based polymer (C) has a reactive silicon group indicated in general formula (2).

-Si(R²)_{3-b}(Y)_{b} (2)

where: each R² independently represents a hydrocarbon group that may have a substituent, the hydrocarbon group having 1 to 20 carbon atoms; the substituent may have a hetero atom; each Y is independently a hydroxy group or a hydrolyzable group; and "b" is 1, 2, or 3.

The description of R¹ in the section [1. Crystalline polyoxyalkylene-based polymer (A)] applies to a description of R². The description of X in the section [1. Crystalline polyoxyalkylene-based polymer (A)] applies to a description of Y. Y is preferably an alkoxy group, and more preferably a methoxy group.

"b" is 1, 2, or 3. "b" is preferably 2 or 3. "b" is more preferably 3 in order to achieve a curable composition with good curability and a cured product with good strength.

Examples of the reactive silicon group represented by formula (2) include those listed as the examples of the crystalline polyoxyalkylene-based polymer (A). Specific examples of the reactive silicon group represented by formula (2) include a trimethoxysilyl group, a triethoxysilyl group, a tris(2-propenyloxy)silyl group, a triacetoxysilyl group, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, an (N,N-diethylaminomethyl)dimethoxysilyl group, and an (N,N-diethylaminomethyl)diethoxysilyl group. In terms of mechanical properties of the cured product, a dimethoxymethylsilyl group, a trimethoxysilyl group, a triethoxysilyl group, and a (methoxymethyl)dimethoxysilyl group are preferable. In terms of activity of the reactive silicon group, a trimethoxysilyl group, a (chloromethyl)dimethoxysilyl group, and a (methoxymethyl)dimethoxysilyl group are preferable, and a trimethoxysilyl group is more preferable.

A main chain of the amorphous polyoxyalkylene-based polymer (C) has a repeating unit represented by -R⁴-O-. R⁴ is a bivalent functional group having 1 to 14 carbon atoms, and more preferably a bivalent functional group having 2 to 4 carbon atoms. Further, R⁴ is preferably an alkylene group. The alkylene group may be linear or branched. Specific examples of the repeating unit represented by -R⁴-O- include -CH₂O-, -CH₂CH₂O-, -CH₂CH(CH₃)O-, -CH₂C(CH₃)(CH₃)O-, and -CH₂CH₂CH₂CH₂O-. Among the examples listed above, - CH₂CH₂O- and -CH₂CH(CH₃)O- are preferable, and - CH₂CH(CH₃)O- is more preferable. In an embodiment, the polyoxyalkylene-based polymer (C) is a polyoxypropylene-based polymer.

The repeating unit represented by -R³-O- accounts for preferably not less than 50%, more preferably not less than 70%, and even more preferably not less than 90% of all repeating units constituting the main chain of the amorphous polyoxyalkylene-based polymer (C). The main chain of the amorphous polyoxyalkylene-based polymer (C) may have two or more types of the repeating unit represented by -R³-O-. In an embodiment, the repeating unit represented by - CH₂CH(CH₃)O- accounts for not less than 50%, not less than 70%, and or not less than 90% of all the repeating units constituting the main chain of the amorphous polyoxyalkylene-based polymer (C).

The main chain of the amorphous polyoxyalkylene-based polymer (C) may be linear or branched.

The number average molecular weight of the amorphous polyoxyalkylene-based polymer (C) is not particularly limited. The lower limit of the number average molecular weight is preferably not less than 5,000, more preferably not less than 10,000, even more preferably not less than 12,000, and particularly preferably not less than 13,000. The upper limit of the number average molecular weight is preferably not more than 100,000, more preferably not more than 40,000, even more preferably not more than 25,000, and particularly preferably not more than 20,000. The number average molecular weight of the amorphous polyoxyalkylene-based polymer (C) is determined as a polystyrene equivalent molecular weight as measured by GPC. The number average molecular weight that is in the foregoing range makes it possible to easily produce the amorphous polyoxyalkylene-based polymer (C) and does not excessively increase production cost. The number average molecular weight that is in the foregoing range also makes it possible to obtain a cured product which has high strength.

The molecular weight distribution (Mw/Mn) of the amorphous polyoxyalkylene-based polymer (C) is not particularly limited but is preferably narrow. The molecular weight distribution is preferably not more than 1.6, more preferably not more than 1.4, even more preferably not more than 1.3, and particularly preferably not more than 1.2. The number average molecular weight and the weight average molecular weight of the amorphous polyoxyalkylene-based polymer (C) are each determined as a polystyrene equivalent molecular weight as measured by GPC.

### (Method for producing amorphous polyoxyalkylene-based polymer (C))

The main chain of the amorphous polyoxyalkylene-based polymer (C) can be formed by a method conventionally known in the art. For example, the main chain of the amorphous polyoxyalkylene-based polymer (C) can be formed by polymerizing an epoxy compound with a hydroxy group-containing initiator. This makes it possible to obtain a hydroxy group-terminated polyoxyalkylene-based polymer. A polymerization method in which a double metal cyanide complex catalyst (such as a zinc hexacyanocobaltate glyme complex) is used is preferable because the molecular weight distribution (Mw/Mn) of a resulting polymer becomes narrow.

The hydroxy group-containing initiator is not particularly limited. Examples of the hydroxy group-containing initiator include ethylene glycol, propylene glycol, glycerin, pentaerythritol, low-molecular-weight polyoxypropylene glycol, low-molecular-weight polyoxypropylene triol, butanol, allyl alcohol, methanol, ethanol, propanol, butanol, pentanol, hexanol, low-molecular-weight polyoxypropylene monoallyl ether, and low-molecular-weight polyoxypropylene monoalkyl ether. In order to obtain the polyoxyalkylene-based polymer (C) the main chain of which is branched, it is only necessary to use an initiator having three or more hydroxy groups. Examples of such an initiator include glycerin, pentaerythritol, and low-molecular-weight polyoxypropylene triol.

The epoxy compound is not particularly limited. Examples of the epoxy compound include alkylene oxides (such as ethylene oxide and propylene oxide) and glycidyl ethers (such as methyl glycidyl ether and butyl glycidyl ether). The epoxy compound is preferably propylene oxide.

The methods described in the section [1. Crystalline polyoxyalkylene-based polymer (A)] in relation to the crystalline polyoxyalkylene-based polymer (A) are applicable to a method for introducing the reactive silicon group into the amorphous polyoxyalkylene-based polymer (C). In particular, the method in which a polyoxyalkylene-based polymer having a carbon-carbon unsaturated bond in a terminal part thereof and a hydrosilane compound having a reactive silicon group are subjected to a hydroxylation reaction is preferable. Examples of an advantage of this method include an advantage of making it possible to easily causing a reaction, making it easy to adjust the amount of reactive silicon groups introduced, and achieving stable physical properties of a resulting polymer.

The amorphous polyoxyalkylene-based polymer (C) may be a commercially available product. Specific examples of such a product include SAT350, SAT400, S203H, S303H, EST280, SAX530, SAX580, SAX590, S810, S257, S258, S227, S327, MA452, and MA480 (each available from KANEKA CORPORATION).

Only one type of the amorphous polyoxyalkylene-based polymer (C) may be used, or two or more different types of the amorphous polyoxyalkylene-based polymer (C) may be used in combination.

The lower limit of the weight ratio ((A)/(C)) of the crystalline polyoxyalkylene-based polymer (A) to the amorphous polyoxyalkylene-based polymer (C) in the curable composition is preferably not less than 1/99, more preferably not less than 10/90, and even more preferably not less than 20/80. The upper limit of (A)/(C) is preferably not more than 99/1, more preferably not more than 90/10, and even more preferably not more than 80/20.

### [2.3. Silane coupling agent (D)]

Specific examples of the silane coupling agent (D) include amino group-containing silane, isocyanate group-containing silane, mercapto group-containing silane, and epoxy group-containing silane. Examples of the amino group-containing silane include γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane. Examples of the isocyanate group-containing silane include γ-isocyanatepropyltrimethoxysilane, γ-isocyanatepropyltriethoxysilane, γ-isocyanatepropylmethyldimethoxysilane, α-isocyanatemethyltrimethoxysilane, and α-isocyanatemethyldimethoxymethylsilane. Examples of the mercapto group-containing silane include γ-mercaptopropyltrimethoxysilane, γ-mercaptopropyltriethoxysilane, and γ-mercaptopropylmethyldimethoxysilane. Examples of the epoxy group-containing silane include γ-glycidoxypropyltrimethoxysilane and β-(3,4-epoxycyclohexyl)ethyltrimethoxysilane.

As the silane coupling agent (D), a condensate or a reaction product of the silane coupling agent (D) may be used. Examples of the condensate of the silane coupling agent (D) include a condensate of aminosilane and a condensate of aminosilane and another alkoxysilane. Examples of the reaction product of the silane coupling agent include a reaction product of aminosilane and epoxysilane and a reaction product of aminosilane and (meth)acrylic group-containing silane. Specific examples of such a silane coupling agent (D) include Dynasylan 1146 and Dynasylan 1124 (each available from EVONIK).

Only one type of the silane coupling agent (D) may be used, or two or more different types of the silane coupling agent (D) may be used in combination.

The lower limit of the amount of the silane coupling agent (D) contained in the curable composition is preferably not less than 0.1 parts by weight, and more preferably not less than 0.5 parts by weight, where the total content of hydrolyzable silyl group-containing polymers is 100 parts by weight. The upper limit of the amount of the silane coupling agent (D) contained in the curable composition is preferably not more than 20 parts by weight, and more preferably not more than 10 parts by weight, where the total content of hydrolyzable silyl group-containing polymers is 100 parts by weight. In an embodiment, the total content of hydrolyzable silyl group-containing polymers is the total content of (i) the crystalline polyoxyalkylene-based polymer (A) and (ii) the amorphous polyoxyalkylene-based polymer (C) and the (meth)acrylic ester-based polymer (E) that are optionally contained. In a case where the curable composition contains a hydrolyzable silyl group-containing polymer other than these polymers, the total content of hydrolyzable silyl group-containing polymers also includes the content of such a polymer.

### [2.4. (Meth)acrylic ester-based polymer (E) having reactive silicon group]

The curable composition may further contain the (meth)acrylic ester-based polymer (E) having a reactive silicon group. In the present specification, the "(meth)acrylic" refers to acrylic and/or methacrylic. Containing the (meth)acrylic ester-based polymer (E) having a reactive silicon group improves weather resistance of a cured product and adhesiveness of the curable composition.

A (meth)acrylic ester-based monomer constituting a main chain of the (meth)acrylic ester-based polymer (E) is not particularly limited. Specific examples of the monomer include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, (3-trimethoxysilyl)propyl (meth)acrylate, (3-dimethoxymethylsilyl)propyl (meth)acrylate, (2-trimethoxysilyl) ethyl (meth)acrylate, (2-dimethoxymethylsilyl)ethyl (meth)acrylate, trimethoxysilylmethyl (meth)acrylate, (dimethoxymethylsilyl)methyl (meth)acrylate, an ethylene oxide adduct of (meth)acrylic acid, trifluoromethylmetyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

The main chain of the (meth)acrylic ester-based polymer (E) may have a repeating unit derived from a (meth)acrylic monomer other than a (meth)acrylic ester monomer. Examples of such a (meth)acrylic monomer include acrylic acid monomers (such as acrylic acid and methacrylic acid), monomers having an amide group (such as N-methylolacrylamide and N-methylolmethacrylamide), monomers having an epoxy group (such as glycidyl acrylate and glycidyl methacrylate), and monomers having a nitrogen-containing group (such as diethylaminoethyl acrylate and diethylaminoethyl methacrylate).

The main chain of the (meth)acrylic ester-based polymer (E) may have a repeating unit derived from a vinyl-based monomer. The vinyl-based monomer is not particularly limited. Examples of the vinyl-based monomer include: styrene-based monomers (such as styrene, vinyltoluene, α-methylstyrene, chlorostyrene, styrenesulfonate, and salts thereof); vinyl-based monomers having fluorine (such as perfluoroethylene, perfluropropylene, and vinylidene fluoride); vinyl-based monomers having silicon (such as vinyltrimethoxysilane and vinyltriethoxysilane); maleic acid-based monomers (such as maleic anhydride, maleic acid, monoalkyl ester of maleic acid, and dialkyl ester of maleic acid); fumaric acid-based monomers (such as fumaric acid, monoalkyl ester of fumaratefumaric acid, and dialkyl ester of fumaric acid); maleimide-based monomers (such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide); vinyl-based monomers having a nitrile group (such as acrylonitrile and methacrylonitrile); vinyl-based monomers having an amide group (such as acrylamide and methacrylamide); vinyl ester-based monomers (such as vinyl acetate, vinyl propionate, vinyl pivalate, vinyl benzoate, and vinyl cinnamate); alkenyl-based monomers (such as ethylene and propylene); conjugated diene-based monomers (such as butadiene and isoprene); and vinyl chloride, vinylidene chloride, allyl chloride, and allyl alcohol. Only one type of the vinyl-based monomer may be used, or two or more different types of the vinyl-based monomer may be used in combination.

In terms of physical properties of a resulting polymer, the main chain of the (meth)acrylic ester-based polymer (E) is constituted by preferably at least one type of repeating unit selected from the group consisting of styrene-based monomers and (meth)acrylic-based monomers, more preferably at least one type of repeating unit selected from the group consisting of acrylic ester monomers and methacrylic ester monomers, and even more preferably at least one type of repeating unit selected from the group consisting of acrylic ester monomers.

The repeating unit derived from a (meth)acrylic ester monomer accounts for preferably not less than 50%, more preferably not less than 70%, and even more preferably not less than 90% of all repeating units constituting the main chain of the (meth)acrylic ester-based polymer (E).

The lower limit of the number of reactive silicon groups contained in the (meth)acrylic ester-based polymer (E) is preferably not less than 1.0 per molecule on average, and more preferably not less than 1.27 per molecule on average in terms of mechanical properties of a cured product. The upper limit of the number of reactive silicon groups is preferably not more than 5.0, and more preferably not more than 3.0 in terms of stability of a polymer.

The (meth)acrylic ester-based polymer (E) has a reactive silicon group indicated in general formula (3).

-SiR⁵_{3-c}Z_{c} (3)

where: each R⁵ independently represents a hydrocarbon group having 1 to 20 carbon atoms; the substituent may have a hetero atom; each Z is independently a hydroxy group or a hydrolyzable group; and "c" is 1, 2, or 3.

R⁵ is a hydrocarbon group having 1 to 20 carbon atoms. The number of carbon atoms of R⁵ is preferably 1 to 12, more preferably 1 to 6, and even more preferably 1 to 4. The hydrocarbon group may be an unsubstituted hydrocarbon group or may be a hydrocarbon group having a substituent.

Specific examples of R⁵ include: alkyl groups (such as methyl groups, ethyl groups, n-propyl groups, isopropyl groups, n-butyl groups, isobutyl groups, sec-butyl groups, tert-butyl groups, n-pentyl groups, n-hexyl groups, n-heptyl groups, n-octyl groups, 2-ethyl-n-hexyl groups, n-nonyl groups, n-decyl groups, n-undecyl groups, n-dodecyl groups, n-tridecyl groups, n-tetradecyl groups, n-pentadecyl groups, n-hexadecyl groups, n-octadecyl groups, n-nonadesilyl groups, and n-icosyl groups); alkenyl groups (such as vinyl groups, 2-propenyl groups, 3-butenyl groups, and 4-pentenyl groups); cycloalkyl groups (such as cyclopropyl groups, cyclobutyl groups, cyclopentyl groups, cyclohexyl groups, cycloheptyl groups, and cyclooctyl groups); aryl groups (such as phenyl groups, naphthalene-1-yl groups, naphthalene-2-yl groups, o-phenylphenyl groups, m-phenylphenyl groups, and p-phenylphenyl groups); and aralkyl groups (such as benzyl groups, phenethyl groups, naphthalene-1-ylmethyl groups, and naphthalene-2-ylmethyl groups).

Suitable examples of R⁵ include: alkyl groups (such as methyl groups and ethyl groups); alkyl groups having hetero atom-containing substituents (such as chloromethyl groups and methoxymethyl groups); cycloalkyl groups (such as cyclohexyl groups); aryl groups (such as phenyl groups); and aralkyl groups (such as benzyl groups). Each R⁵ is preferably independently selected from the group consisting of a methyl group, a methoxymethyl group, and a chloromethyl group. Each R⁵ is more preferably independently selected from the group consisting of a methyl group and a methoxymethyl group. R⁵ is even more preferably a methyl group.

Z is a hydroxy group or a hydrolyzable group. Examples of the hydrolyzable group include a halogen atom, an alkoxy group, an acyloxy group, a ketoximate group, an amino group, an amide group, an acid amide group, an aminooxy group, a mercapto group, and an alkenyloxy group. Among the above-listed hydrolyzable groups, an alkoxy group is preferable because of having mild hydrolyzability and being easy to handle. An alkoxy group is preferably independently selected from a methoxy group and an ethoxy group and is more preferably a methoxy group.

"c" is 1, 2, or 3. "c" is preferably 2 or 3.

Specific examples of the reactive silicon group represented by formula (3) include a trimethoxysilyl group, a triethoxysilyl group, a tris(2-propenyloxy)silyl group, a triacetoxysilyl group, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, an (N,N-diethylaminomethyl)dimethoxysilyl group, and an (N,N-diethylaminomethyl)diethoxysilyl group. In terms of mechanical properties of the cured product, a dimethoxymethylsilyl group, a trimethoxysilyl group, a triethoxysilyl group, and a (methoxymethyl)dimethoxysilyl group are preferable. In terms of activity of the reactive silicon group, a trimethoxysilyl group and a (methoxymethyl)dimethoxysilyl group are preferable, and a trimethoxysilyl group is more preferable.

The number average molecular weight of the (meth)acrylic ester-based polymer (E) is not particularly limited. The lower limit of the number average molecular weight is preferably not less than 500, and more preferably not less than 1,000. The upper limit of the number average molecular weight is preferably not more than 100,000, more preferably not more than 50,000, and even more preferably not more than 30,000. The number average molecular weight of the (meth)acrylic ester-based polymer (E) is determined as a polystyrene equivalent molecular weight as measured by GPC.

The molecular weight distribution (Mw/Mn) of the (meth)acrylic ester-based polymer (E) is not particularly limited but is preferably narrow. The molecular weight distribution is preferably not more than 2.5, more preferably not more than 2.0, even more preferably not more than 1.5, and particularly preferably not more than 1.2. The number average molecular weight and the weight average molecular weight of the (meth)acrylic ester-based polymer (E) are each determined as a polystyrene equivalent molecular weight as measured by GPC.

Only one type of the (meth)acrylic ester-based polymer (E) may be used, or two or more different types of the (meth)acrylic ester-based polymer (E) may be used in combination.

### (Method for producing (meth)acrylic ester-based polymer (E))

A method for introducing the reactive silicon group into the (meth)acrylic ester-based polymer (E) is not particularly limited. Examples of the method include the following methods 1 to 4.
- Method 1: A method in which a compound having both a polymerizable unsaturated group and a reactive silicon group is copolymerized with the foregoing monomers. A reactive silicon group is randomly introduced into the main chain of the (meth)acrylic ester-based polymer (E) obtained by this method.
- Method 2: A method in which a mercaptosilane compound having a reactive silicon group is used as a chain transfer agent to polymerize a (meth)acrylic ester-based polymer. A reactive silicon group is introduced at a terminal of the main chain of the (meth)acrylic ester-based polymer (E) obtained by this method.
- Method 3: A method in which a compound having both a polymerizable unsaturated group and a reactive functional group is copolymerized with the foregoing monomers, and then a compound having both a reactive silicon group and a functional group that reacts with a reactive functional group is reacted. Specific examples of the method include a method in which a hydroxy group contained in the main chain and isocyanate silane having a reactive silicon group are reacted after the foregoing monomers are copolymerized with 2-hydroxyethyl acrylate. Other specific examples of the method include a method in which an epoxy group contained in the main chain and an aminosilane compound having a reactive silicon group are reacted after the foregoing monomers are copolymerized with glycidyl acrylate.
- Method 4: A method in which a terminal functional group of a (meth)acrylic ester-based polymer synthesized by living radical polymerization is modified to introduce a reactive silicon group. A (meth)acrylic ester-based polymer obtained by living radical polymerization makes it easy to introduce a functional group at a polymer terminal. Modifying this terminal functional group makes it possible to introduce a reactive silicon group at a terminal of the main chain. This method makes it possible to obtain a polymer having a narrow molecular weight distribution. The molecular weight distribution is preferably not more than 1.6, more preferably not more than 1.4, and even more preferably not more than 1.2. The number average molecular weight and the weight average molecular weight of the (meth)acrylic ester-based polymer (E) are each determined as a polystyrene equivalent molecular weight as measured by GPC.

In the method 1, examples of the compound having both a polymerizable unsaturated group and a reactive silicon group include 3-(trimethoxysilyl)propyl (meth)acrylate, 3-(dimethoxymethylsilyl)propyl (meth)acrylate, 3-(triethoxysilyl)propyl (meth)acrylate, (trimethoxysilyl)methyl (meth)acrylate, (dimethoxymethylsilyl)methyl (meth)acrylate, (triethoxysilyl)methyl (meth)acrylate, (diethoxymethylsilyl)methyl (meth)acrylate, and 3-((methoxymethyl)dimethoxysilyl)propyl (meth)acrylate. Among the above-listed compounds, trimethoxysilylpropyl (meth)acrylate and (dimethoxymethylsilyl)propyl (meth)acrylate are preferable in terms of availability.

In the method 2, examples of the mercaptosilane compound having a reactive silicon group include 3-mercaptopropyltrimethoxysilane, 3-mercaptopropyldimethoxymethylsilane, 3-mercaptopropyltriethoxysilane, mercaptomethyl trimethoxysilane, (mercaptomethyl)dimethoxymethylsilane, and mercaptomethyltriethoxysilane.

In the method 3, examples of the compound having both a polymerizable unsaturated group and a reactive functional group include: isocyanate silane compounds (such as 3-isocyanate propyltrimethoxysilane, 3-isocyanate propyldimethoxymethylsilane, 3-isocyanate propyltriethoxysilane, isocyanate methyltrimethoxysilane, isocyanate methyltriethoxysilane, isocyanate methyldimethoxymethylsilane, and isocyanate methyldiethoxymethylsilane); epoxysilane compounds (such as 3-glycidoxypropyltrimethoxysilane, 3-glycidoxypropyltriethoxysilane, 3-glycidoxypropyldimethoxymethylsilane, glycidoxymethyltrimethoxysilane, glycidoxymethyltriethoxysilane, glycidoxymethyldimethoxymethylsilane, and glycidoxymethyldiethoxymethylsilane); and aminosilane compounds (such as 3-aminopropyltrimethoxysilane, 3-aminopropyltriethoxysilane, 3-aminopropyldimethoxymethylsilane, aminomethyltrimethoxysilane, aminomethyltriethoxysilane, aminomethyldimethoxymethylsilane, N-cyclohexylaminomethyltriethoxysilane, N-cyclohexylaminomethyldiethoxymethylsilane, N-phenylaminomethyltrimethoxysilane, and (2-aminoethyl)aminomethyltrimethoxysilane).

Examples of a modification reaction that can be used in the method 4 include the following.
· A (meth)acrylic ester-based polymer having a terminal reactive group is obtained by polymerization. Next, a compound having both a reactive silicon group and a functional group that can react with a terminal reactive group is reacted.
· A (meth)acrylic ester-based polymer having a terminal reactive group is obtained by polymerization. Then, a compound having both a double bond and a functional group that can react with a terminal reactive group is reacted. Thus, a double bond is introduced at a polymer terminal. Subsequently, a reactive silicon group is introduced by a hydrosilylation reaction or the like.

The methods 1 to 4 may be optionally combined. For example, combining the methods 2 and 3 makes it possible to obtain the (meth)acrylic ester-based polymer (E) having a reactive silicon group both in the main chain and at a terminal thereof.

### [2.5 Other components]

The curable composition may contain component(s) other than those listed earlier. Examples of such a component include a filler, an adhesiveness imparting agent, a plasticizer, a solvent, a diluent, an anti-sagging agent, an antioxidant, a light stabilizer, an ultraviolet absorber, a physical property adjusting agent, a tackifier resin, an compound having an epoxy group, a photocurable substance, an oxygen curable substance, an epoxy resin, and another resin. The curable composition may further contain an additive for adjusting physical properties of the curable composition or a cured product. Examples of such an additive include a surface property improving agent, a blowing agent, a curability adjusting agent, a flame retardant, a silicate, a radical inhibitor, a metal deactivator, an antiozonant, a phosphorus-based peroxide decomposition agent, a lubricant, a pigment, and an antifungal agent.

Hereinafter, the total content of curable polymers means the total content of substances that are crosslinked to contribute to formation of a cured product. A curable polymer encompasses a hydrolyzable silyl group-containing polymer and other curable polymers (such as an epoxy resin). In an embodiment, the total content of curable polymers is the total content of (i) the crystalline polyoxyalkylene-based polymer (A) and (ii) the amorphous polyoxyalkylene-based polymer (C), the (meth)acrylic ester-based polymer (E), and the epoxy resin that are optionally contained.

### (Filler)

Examples of the filler include heavy calcium carbonate, colloidal calcium carbonate, magnesium carbonate, silious earth, clay, talc, titanium oxide, fumed silica, precipitable silica, crystalline silica, fused silica, silicic anhydride, hydrous silicic acid, carbon black, ferric oxide, an aluminum fine powder, zinc oxide, active zinc oxide, a PVC powder, a PMMA powder, glass fibers, and a filament.

The amount of the filler contained in the curable composition is preferably 1 part by weight to 600 parts by weight, and more preferably 10 parts by weight to 300 parts by weight, where the total content of curable polymers is 100 parts by weight. Only one type of the filler may be used, or two or more different types of the filler may be used in combination.

In order to reduce specific gravity of the curable composition, an organic balloon or an inorganic balloon may be added as the filler. The balloon refers to a spherical filler, the interior of which is hollow. Examples of a material of the balloon include inorganic materials (such as glass, shirasu, and silica) and organic materials (such as phenol resin, urea resin, polystyrene, and saran).

The amount of the balloon contained in the curable composition is preferably 0.1 parts by weight to 100 parts by weight, and more preferably 1 part by weight to 20 parts by weight, where the total content of curable polymers is 100 parts by weight. Only one type of the balloon may be used, or two or more different types of the balloon may be used in combination.

### (Plasticizer)

Examples of the plasticizer include: phthalate ester compounds (such as dibutyl phthalate, diisononyl phthalate (DINP), diheptyl phthalate, di(2-ethylhexyl)phthalate, diisodecyl phthalate (DIDP), and butylbenzyl phthalate); terephthalate ester compounds (such as bis(2-ethylhexyl)-1,4-benzenedicarboxylate); and non-phthalate ester compounds (such as 1,2-cyclohexanedicarboxylic acid diisononyl ester, Hexamoll DINCH (available from BASF) and the like as specific product examples); aliphatic polyvalent carboxylic acid ester compounds (such as dioctyl adipate, dioctyl sebacate, dibutyl sebacate, diisodecyl succinate, and tributyl acetylcitrate); unsaturated fatty acid ester compounds (such as butyl oleate and methyl acetylricinoleate); alkyl sulfonic acid phenyl esters (Mesamoll (available from LANXESS) and the like as specific product examples); phosphate ester compounds; trimellitic acid ester compounds; hydrocarbon-based oils (such as a chlorinated paraffin, alkyl diphenyl, and partial hydrogenated terphenyl); processing oil; and epoxy plasticizers (such as epoxidized soybean oil and benzyl epoxystearate).

The plasticizer may be a polymeric plasticizer. Specific examples of the polymeric plasticizer include: vinyl-based polymers; polyester-based plasticizers; polyether polyols (such as polyethylene glycol and polypropylene glycol each having a number average molecular weight of not less than 500); derivatives obtained by converting hydroxy groups of polyether polyols into ester groups, ether groups, or the like; polystyrenes; polybutadiene; polybutene; polyisobutylene; butadiene-acrylonitrile; and polychloroprene.

The amount of the plasticizer contained in the curable composition is preferably 5 parts by weight to 150 parts by weight, more preferably 10 parts by weight to 120 parts by weight, and even more preferably 20 parts by weight to 100 parts by weight, where the total content of curable polymers is 100 parts by weight. In a case where the amount of the plasticizer contained is not less than 5 parts by weight, an effect as the plasticizer is sufficiently expectable. In a case where the amount of the plasticizer contained is not more than 150 parts by weight, it is possible to impart sufficient mechanical strength to a cured product. Only one type of the plasticizer may be used, or two or more different types of the plasticizer may be used in combination.

### (Solvent and diluent)

Examples of the solvent and the diluent include aliphatic hydrocarbon, aromatic hydrocarbon, alicyclic hydrocarbon, halogenated hydrocarbon, alcohol, ester, ketone, and ether. The boiling point of the solvent is preferably not lower than 150°C, more preferably not lower than 200°C, and particularly preferably not lower than 250°C, so as not to contaminate ambient air in a case where the curable composition is used indoors. Only one type of the solvent and/or the diluent may be used, or two or more different types of the solvent and/or the diluent may be used in combination.

### (Anti-sagging agent)

Adding the anti-sagging agent to the curable composition prevents sagging of the curable composition and improves workability. Examples of the anti-sagging agent include: polyamide waxes; hydrogenated castor oil derivatives; and metal soaps (such as calcium stearate, aluminum stearate, and barium stearate).

The amount of the anti-sagging agent contained in the curable composition is preferably 0.1 parts by weight to 20 parts by weight, where the total content of curable polymers is 100 parts by weight. Only one type of the anti-sagging agent may be used, or two or more different types of the anti-sagging agent may be used in combination.

### (Antioxidant)

Adding the antioxidant to the curable composition improves weather resistance of a cured product. Examples of the antioxidant include a hindered phenol-based antioxidant, a monophenol-based antioxidant, a bisphenol-based antioxidant, and a polyphenol-based antioxidant. Specific product examples include BHT, Irganox 245, Irganox 1010, Irganox 1035, Irganox 1076, Irganox 1135, Irganox 1330, and Irganox 1520, and SONGNOX 1076. Further, a hindered amine-based light stabilizer may be added as the antioxidant. Specific product examples include: Tinuvin 622 LD, Tinuvin 144, Tinuvin 292, CHIMASSORB 944 LD, and CHIMASSORB 119 FL (each available from BASF); ADK STAB LA-57, ADK STAB LA-62, ADK STAB LA-67, ADK STAB LA-63, and ADK STAB LA-68 (each available from ADEKA CORPORATION); SANOL LS-2626, SANOL LS-1114, and SANOL LS-744 (each available from Sankyo Lifetech Co., Ltd.); and NOCRAC CD (OUCHI SHINKO CHEMICAL INDUSTRY CO., LTD.). Examples of a product of an additional antioxidant include SONGNOX 4120, Naugard 445, and OKABESTCLX 050.

Specific examples of the antioxidant are also disclosed in Japanese Patent Application Publication Tokukaihei No. 4-283259 and Japanese Patent Application Publication Tokukaihei No. 9-194731.

The amount of the antioxidant contained in the curable composition is preferably 0.1 parts by weight to 10 parts by weight, and more preferably 0.2 parts by weight to 5 parts by weight, where the total content of curable polymers is 100 parts by weight. Only one type of the antioxidant may be used, or two or more different types of the antioxidant may be used in combination.

### (Light stabilizer)

Adding the light stabilizer to the curable composition makes it possible to prevent photooxidative degradation of a cured product. Examples of the light stabilizer include a benzotriazole-based light stabilizer, a hindered amine-based light stabilizer, and a benzoate-based light stabilizer. Among the examples listed above, the hindered amine-based light stabilizer is preferable. Specific product examples of the hindered amine-based light stabilizer include: Tinuvin 123, Tinuvin 144, Tinuvin 249, Tinuvin 292, Tinuvin 312, Tinuvin 622 LD, Tinuvin 765, Tinuvin 770, Tinuvin 880, Tinuvin 5866, Tinuvin B97, CHIMASSORB 119 FL, and CHIMASSORB 944 LD (each available from BASF); ADK STAB LA-57, ADK STAB LA-62, ADK STAB LA-63, ADK STAB LA-67, and ADK STAB LA-68 (each available from ADEKA CORPORATION); SANOL LS-292, SANOL LS-2626, SANOL LS-765, SANOL LS-744, and SANOL LS-1114 (each available from Sankyo Lifetech Co., Ltd.); SABOSTAB UV 91, SABOSTAB UV 119, SONGSORB CS 5100, SONGSORB CS 622, and SONGSORB CS 944 (each available from SONGWON), and NOCRAC CD (available from OUCHI SHINKO CHEMICAL INDUSTRY CO., LTD.).

The amount of the light stabilizer contained in the curable composition is preferably 0.1 parts by weight to 10 parts by weight, and more preferably 0.2 parts by weight to 5 parts by weight, where the total content of curable polymers is 100 parts by weight. Only one type of the light stabilizer may be used, or two or more different types of the light stabilizer may be used in combination.

### (Ultraviolet absorber)

Adding the ultraviolet absorber to the curable composition improves surface weather resistance of a cured product. Examples of the ultraviolet absorber include a benzophenone-based ultraviolet absorber, a benzotriazole-based ultraviolet absorber, a salicylate-based ultraviolet absorber, a triazine-based ultraviolet absorber, a substituted acrylonitrile-based ultraviolet absorber, and a metal chelating ultraviolet absorber. Among these, the benzotriazole-based ultraviolet absorber is preferable. Specific product examples of the benzotriazole-based ultraviolet absorber include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (each available from BASF); and SONGSORB 3290 (available from SONGWON). Specific product examples of the triazine-based ultraviolet absorber include Tinuvin 400, Tinuvin 405, Tinuvin 477, and Tinuvin 1577 ED (each available from BASF); and SONGSORB CS 400 and SONGSORB 1577 (each available from SONGWON). Specific product examples of the benzophenone-based ultraviolet absorber include SONGSORB 8100 (available from

### SONGWON).

Alternatively, a product in which the antioxidant, the light stabilizer, and the ultraviolet absorber are mixed may be used. Examples of such a product include Addworks IBC 760 (available from Clariant).

The amount of the ultraviolet absorber contained in the curable composition is preferably 0.1 parts by weight to 10 parts by weight, and more preferably 0.2 parts by weight to 5 parts by weight, where the total content of curable polymers is 100 parts by weight. Only one type of the ultraviolet absorber may be used, or two or more different types of the ultraviolet absorber may be used in combination.

### (Physical property adjusting agent)

Adding the physical property adjusting agent to the curable composition makes it possible to adjust tensile properties of a cured product. For example, it is possible to improve tensile strength by increasing hardness of the cured product, or to improve elongation at break by reducing the hardness.

Examples of the physical property adjusting agent include: alkylalkoxysilanes (such as phenoxytrimethylsilane, methyltrimethoxysilane, dimethyldimethoxysilane, trimethylmethoxysilane, and n-propyltrimethoxysilane); arylalkoxysilanes (such as diphenyldimethoxysilane and phenyltrimethoxysilane); alkyl isopropenoxysilanes (such as dimethyldiisopropenoxysilane, methyltriisopropenoxysilane, and γ-glycidoxypropylmethyldiisopropenoxysilane); trialkylsilyl borates (such as tris(trimethylsilyl)borate and tris(triethylsilyl)borate); silicone varnish; and polysiloxane.

In particular, a compound that causes a monovalent silanol group (preferably a trimethylsilanol group) by hydrolysis makes it possible to reduce a modulus of a cured product without increasing stickiness of a surface of the cured product. Examples of such a compound include alcohol derivatives of silicone compounds (examples of alcohol include hexanol, octanol, phenol, trimethylolpropane, glycerin, pentaerythritol, and sorbitol). Specific examples of the compound include phenoxytrimethylsilane and tris((trimethylsiloxy)methyl)propane.

The amount of the physical property adjusting agent contained in the curable composition is preferably 0.1 parts by weight to 10 parts by weight, and more preferably 0.5 parts by weight to 5 parts by weight, where the total content of curable polymers is 100 parts by weight. Only one type of the physical property adjusting agent may be used, or two or more different types of the physical property adjusting agent may be used in combination.

### (Tackifier resin)

Adding the tackifier resin to the curable composition improves adhesiveness and adhesion to a base material. Specific examples of the tackifier resin include: terpene-based resins; aromatic modified terpene resins; hydrogenated terpene resins; terpene-phenol resins; phenol resins; modified phenol resins; xylene-phenol resins; cyclopentadiene-phenol resins; coumarone indene resins; rosin-based resins; rosin ester resins; hydrogenated rosin ester resins; xylene resins; low molecular weight polystyrene-based resins; styrene copolymer resins; styrene-based block copolymers and hydrogenated products thereof; petroleum resins (C5 hydrocarbon resin, C9 hydrocarbon resin, C5C9 hydrocarbon copolymer resin, and the like); hydrogenated petroleum resins; and DCPD resins.

The amount of the tackifier resin contained in the curable composition is preferably 2 parts by weight to 100 parts by weight, more preferably 5 parts by weight to 50 parts by weight, and even more preferably 5 parts to 30 parts, where the total content of curable polymers is 100 parts by weight. In a case where the amount of the tackifier resin contained is not less than 2 parts by weight, an effect of bonding and adhering to a base material is sufficiently expectable. In a case where the amount of the tackifier resin contained is not more than 100 parts by weight, viscosity of the curable composition does not become too high, and thus the curable composition is easy to handle. Only one type of the tackifier resin may be used, or two or more different types of the physical property adjusting agent may be used in combination.

### (Compound having an epoxy group)

Adding the compound having an epoxy group to the curable composition improves recoverability of a cured product. Examples of the compound having an epoxy group include epoxidized unsaturated fats and oils, epoxidized unsaturated fatty acid esters, alicyclic epoxy compounds, epichlorohydrin derivatives, and mixtures of these. More specific examples of the compound having an epoxy group include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate.

The amount of the compound having an epoxy group and contained in the curable composition is preferably 0.5 parts by weight to 50 parts by weight, where the total content of curable polymers is 100 parts by weight. Only one type of the compound having an epoxy group may be used, or two or more different types of the compound having an epoxy group may be used in combination.

### (Photocurable substance)

Adding the photocurable substance to the curable composition forms a film of the photocurable substance on a surface of a cured product. This makes it possible to reduce stickiness of the surface of the cured product and improve weather resistance. There are known examples of the photocurable substance, such as organic monomers, oligomers, resins, and compositions containing any of these. Typical examples of the photocurable substance include: monomers having one or more (meth)acrylic unsaturated groups, oligomers having one or more (meth)acrylic unsaturated groups, and mixtures of these; polyvinyl cinnamate; and azidated resins.

The amount of the photocurable substance contained in the curable composition is preferably 0.1 parts by weight to 20 parts by weight, and more preferably 0.5 parts by weight to 10 parts by weight, where the total content of curable polymers is 100 parts by weight. In a case where the amount of the photocurable substance contained is not less than 0.1 parts by weight, an effect of improving weather resistance is sufficiently expectable. In a case where the amount of the photocurable substance contained is not more than 20 parts by weight, a cured product does not become too hard, and thus cracking can be prevented. Only one type of the photocurable substance may be used, or two or more different types of the photocurable substance may be used in combination.

### (Oxygen curable substance)

The oxygen curable substance is, for example, an unsaturated compound that can react with oxygen in the air. Adding the oxygen curable substance to the curable composition forms a film of the photocurable substance on a surface of a cured product. This makes it possible to reduce stickiness of the surface of the cured product and prevent adhesion of dirt and dust. Examples of the oxygen curable substance include: drying oils (such as tung oil and linseed oil); alkyd resins obtained by modification of drying oils; drying oil-modified acrylic polymers, drying oil-modified epoxy-based resins, and drying oil-modified silicone resins; and liquid polymers (such as 1,2-polybutadiene, 1,4-polybutadiene, and polymers of C5-C8 dienes), which are obtained by polymerizing or copolymerizing diene-based compounds such as butadiene, chloroprene, isoprene, and 1,3-pentadiene.

The amount of the oxygen curable substance contained in the curable composition is preferably 0.1 parts by weight to 20 parts by weight, and more preferably 0.5 parts by weight to 10 parts by weight, where the total content of curable polymers is 100 parts by weight. In a case where the amount of the oxygen curable substance contained is not less than 0.1 parts by weight, an effect of alleviating contamination is sufficiently expectable. In a case where the amount of the oxygen curable substance contained is not more than 20 parts by weight, mechanical strength of a cured product is less likely to be lost. Only one type of the oxygen curable substance may be used, or two or more different types of the oxygen curable substance may be used in combination. The oxygen curable substance and the photocurable substance may be used in combination (see, for example, Japanese Patent Application Publication Tokukaihei No. 3 -160053).

### (Epoxy resin)

The curable composition to which the epoxy resin has been added is particularly preferable as an adhesive agent (in particular, an adhesive agent for an exterior wall tile). Examples of the epoxy resin include bisphenol A-type epoxy resins and novolac-type epoxy resins.

The content of the epoxy resin, the crystalline polyoxyalkylene-based polymer (A), and the amorphous polyoxyalkylene-based polymer (C) is preferably in a range in which the weight ratio of the total content of the crystalline polyoxyalkylene-based polymer (A) and the amorphous polyoxyalkylene-based polymer (C) to the content of the epoxy resin is (100/1) to (1/100). In a case where the epoxy resin is added in a too small amount, it is difficult to obtain an effect of improving impact strength and toughness, the effect being derived from an epoxy resin cured product. In a case where the epoxy resin is added in a too large amount, a cured product tends to have insufficient strength.

In a case where the epoxy resin is added to the curable composition, the curable composition may further contain an epoxy resin curing agent for curing the epoxy resin. The epoxy resin curing agent is not particularly limited, and a commonly used epoxy resin curing agent can be used.

The amount of the epoxy resin curing agent contained in the curable composition is preferably 0.1 parts by weight to 300 parts by weight, where the content of the epoxy resin is 100 parts by weight.

### [3. Preparation and application of curable composition]

### [3.1. Preparation of curable composition]

The curable composition may be a one-component curable composition or may be a two-component curable composition. In the one-component curable composition, all components are added as a single composition. The one-component curable composition is stored in a sealed state before being used, and is cured by moisture in the air after being used. In the two-component curable composition, components are added so as to be separated into two compositions, which are a main agent and a curing agent. The curing agent contains components such as a curing catalyst, a filler, a plasticizer, and water. The main agent and the curing agent of the two-component curable composition are mixed before the two-component curable composition is used. The one-component curable composition is preferable in terms of workability.

In the one-component curable composition, all components are added as a single composition. Thus, it is preferable that components containing moisture be used after being dehydrated and dried in advance, or be dehydrated by pressure reduction or the like during kneading with other components. In addition, adding an alkoxysilane compound further improves storage stability of the curable composition. Examples of the alkoxysilane compound include n-propyltrimethoxysilane, vinyltrimethoxysilane, phenyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane.

The content of a dehydrating agent (in particular, a silicon compound that can react with water, such as vinyltrimethoxysilane) is preferably 0.1 parts by weight to 20 parts by weight, and more preferably 0.5 parts by weight to 10 parts by weight, where the total content of curable polymers is 100 parts by weight.

### [3.2. Application of curable composition]

The curable composition can be used for, for example, a pressure sensitive adhesive, a sealing material for a building, a ship, an automobile, a road, etc., an adhesive agent, a waterproofing material, a coating waterproofing material, an impression material, a vibration-proofing material, a damping material, a sound-proofing material, a foamed material, a coating material, and a spray coating material. A cured product obtained by curing the curable composition in accordance with an embodiment of the present invention has excellent flexibility and excellent adhesiveness. Thus, the curable composition is more preferably used as a sealing material or an adhesive agent among those listed earlier.

Examples of a further application of the curable composition include materials for electrical and electronic components (such as a solar cell back-side sealing material), electrical and electronic components (such as insulating covering materials for electric wires and cables), electrical insulating materials of devices, acoustic insulating materials, elastic adhesive agents, binders, contact-type adhesive agents, spray-type seal materials, crack repair materials, adhesive agents for tile finishing, adhesive agents for asphalt waterproofing materials, powder coating materials, injection materials, rubber materials for medical use, pressure sensitive adhesives for medical use, adhesive sheets for medical use, seal materials for medical devices, dental impression materials, food packaging materials, sealing materials for joints of exterior materials (such as a sizing board), coating materials, non-slip covering materials, cushioning materials, primers, electroconductive materials for electromagnetic wave shielding, thermally conductive materials, hot melt materials, potting agents for electrical and electronic use, films, gaskets, concrete reinforcement materials, adhesive agents for temporary fixing, molding materials, sealing materials for rust prevention and waterproofing of edge surfaces (cut parts) of wired glass and laminated glass, and liquid sealants for use in, for example, automobile components, components of heavy vehicles (such as trucks and busses), components for train cars, aircraft components, components for ships, electric machine components, and machine components. As an example of application to automobile components, the curable composition can be used for bonding/attachment of, for example, plastic covers, trims, flanges, bumpers, windows, interior components, and exterior components. Further, the curable composition that is combined with a primer as needed adheres to various base materials such as glass, porcelain, wood, metal, and a resin molded product. Thus, the curable composition can also be used for various types of sealing compositions or adhesive compositions.

Specific examples of application of the curable composition as an adhesive agent or a sealing material include adhesive agents for interior panels, adhesive agents for exterior panels, adhesive agents for tile finishing, adhesive agents for stone cladding, adhesive agents for ceiling finishing, adhesive agents for floor finishing, adhesive agents for wall finishing, adhesive agents for vehicle panels, adhesive agents for assembly of electrical and electronic precision instruments, adhesive agents for joining leather and textile products, cloth, paper, boards, and rubber, reactive post-crosslinking pressure-sensitive adhesive agents, sealing materials for direct glazing, sealing materials for double-pane glass, sealing materials for structural sealant glazing (SSG), sealing materials for working joints of buildings, and materials for civil engineering and bridges. Furthermore, the curable composition can also be used as an adhesive material such as an adhesive tape or an adhesive sheet.

The present invention is not limited to the embodiments, but can be altered variously by a skilled person in the art within the scope of the claims. The present invention also encompasses, in its technical scope, any embodiment derived by appropriately combining technical means disclosed in differing embodiments.

### [4. Recap]

The present invention includes the following aspects:
<1> A crystalline polyoxyalkylene-based polymer (A) having a reactive silicon group indicated in general formula (1):

   -Si(R¹)₃₋ₐ(X)ₐ (1)

   where:
   each R¹ independently represents a hydrocarbon group that may have a substituent, the hydrocarbon group having 1 to 20 carbon atoms;
   the substituent may have a hetero atom;
   each X is independently a hydroxy group or a hydrolyzable group; and
   "a" is 1, 2, or 3.
<2> The crystalline polyoxyalkylene-based polymer (A) described in <1>, wherein X is an alkoxy group.
<3> The crystalline polyoxyalkylene-based polymer (A) described in <2>, wherein X is a methoxy group.
<4> The crystalline polyoxyalkylene-based polymer (A) described in any one of <1> to <3>, wherein the crystalline polyoxyalkylene-based polymer (A) is a polyoxypropylene-based polymer.
<5> A curable composition containing:
   a crystalline polyoxyalkylene-based polymer (A) described in any one of <1> to <4>; and
   a silanol condensation catalyst (B).
<6> The curable composition described in <5>, further containing an amorphous polyoxyalkylene-based polymer (C) having a reactive silicon group indicated in general formula (2):

   -Si(R²)_{3-b}(Y)_{b} (2)

   where:
   each R² independently represents a hydrocarbon group that may have a substituent, the hydrocarbon group having 1 to 20 carbon atoms;
   the substituent may have a hetero atom;
   each Y is independently a hydroxy group or a hydrolyzable group; and
   "b" is 1, 2, or 3.
<7> The curable composition described in <6>, wherein Y is an alkoxy group.
<8> The curable composition described in <7>, wherein Y is a methoxy group.
<9> The curable composition described in any one of <6> to <8>, wherein the amorphous polyoxyalkylene-based polymer (C) is a polyoxypropylene-based polymer.
<10> The curable composition described in any one of <6> to <9>, wherein a weight ratio ((A)/(C)) of the crystalline polyoxyalkylene-based polymer (A) to the amorphous polyoxyalkylene-based polymer (C) is 1/99 to 99/1.
<11> The curable composition described in any one of <5> to <10>, further containing a silane coupling agent (D).
<12> A sealing material containing a curable composition described in any one of <5> to <10>.
<13> An adhesive agent containing a curable composition described in any one of <5> to <10>.
<14> A cured product obtained by curing a curable composition described in any one of <5> to <10>.

### Examples

The following description will discuss an example of the present invention. Note that the present invention is not limited to the example below.

### [Synthesis Example 1: Synthesis of crystalline polyoxypropylene-based polymer]

A crystalline polyoxypropylene-based polymer having a reactive silicon group was synthesized by the following procedure.
1. A main chain of the crystalline polyoxypropylene-based polymer was synthesized by a method disclosed in J. AM. CHEM. SOC., vol. 127, pp. 11566-11567 (2005). A resulting polymer had a peak top molecular weight of 59,000. It was confirmed by ¹H NMR that the resulting polymer had an acetyl group and a hydroxy group at terminals thereof.
2. To the resulting polymer, sodium ethoxide dissolved in ethanol was added, and a resulting mixture was reacted for 2 hours. Such a reaction was carried out under vacuum at 130°C while a volatile component was being removed.
3. A reaction solution was neutralized with an aqueous hydrochloric acid solution and recrystallized in acetone. Thus, a crystalline polyoxypropylene-based polymer having a hydroxy group at a molecular chain terminal thereof was obtained.
4. To the obtained polymer, 50 ppm of dibutyltinbis(isooctylmercaptopropionate) (NEOSTANN U-360, available from Nitto Kasei Co., Ltd.) was added.
5. A reaction solution was heated to 90°C, and (3-isocyanatopropyl)triethoxysilane (available from Tokyo Chemical Industry Co., Ltd.) was dripped. In this state, a resulting mixture was reacted for 5 hours. Thus, a crystalline polyoxypropylene-based polymer having a triethoxysilyl group at a molecular chain terminal thereof was obtained. The number of triethoxysilyl groups that was calculated from a ¹H NMR spectrum was approximately 1.8 per molecule.

The peak top molecular weight in step 1 is a polystyrene equivalent molecular weight as measured by GPC. Specific measurement conditions are as follows.
· Solution sending system: HLC-8120GPC (available from Tosoh Corporation)
· Column: TSK-GEL H type (available from Tosoh Corporation) · Solvent: chloroform

The mm-triad content of the obtained polyoxypropylene-based polymer was not less than 99%. This shows that a crystalline polyoxypropylene-based resin was indeed obtained. Note that the mm-triad content was determined by ¹³C NMR as in the case of the method disclosed in J. AM. CHEM. SOC., vol. 127, pp. 11566-11567 (2005).

### [Synthesis Example 2: Synthesis of amorphous polyoxypropylene-based polymer]

An amorphous polyoxypropylene-based polymer having a reactive silicon group was synthesized by the following procedure.
1. Propylene oxide was polymerized to obtain amorphous polypropylene oxide having a hydroxy group at a molecular chain terminal thereof. As an initiator, polyoxypropylene diol having a molecular weight of approximately 2,000 was used. As a catalyst, a zinc hexacyanocobaltate glyme complex was used. A resulting polymer had a number average molecular weight of 14,500.
2. To the resulting polymer, a methanol solution of NaOMe was added. Subsequently, methanol was distilled off. The amount of NaOMe added was set to 1.2 molar equivalents with respect to the amount of the hydroxy group contained in the polymer.
3. Allyl chloride was added to convert the hydroxy group at the terminal into an allyl group. After that, unreacted allyl chloride was removed by devolatilization under reduced pressure.
4. 100 parts by weight of the unpurified polymer, 300 parts by weight of n-hexane, and 300 parts by weight of water were mixed and stirred. Thereafter, the water was removed by centrifugal separation.
5. With a resulting hexane solution of the polymer, 300 parts by weight of water was mixed, and a resulting mixture was stirred. Thereafter, the water was removed by centrifugal separation. Subsequently, the hexane was removed by devolatilization under reduced pressure. In this way, a polypropylene oxide-based polymer having an allyl group at a molecular terminal thereof was obtained. This polymer had a number average molecular weight of approximately 14,500.
6. With the obtained polymer, methyldimethoxysilane was reacted at 90°C for 5 hours. In this way, a polyoxypropylene-based polymer having a methyldimethoxysilyl group at a molecular chain terminal thereof was obtained. The amount of methyldimethoxysilane added was 0.8 molar equivalents with respect to the allyl group contained in the polymer. As a catalyst, a 2-propanol solution of a platinum-vinylsiloxane complex (platinum content: 3 wt%) was used. The amount of the catalyst added was 150 ppm, where 100 parts by weight of the polymer was subjected to the reaction. The number of methyldimethoxysilyl groups that was calculated from the ¹H NMR spectrum was approximately 1.6 per molecule.

The number average molecular weight in step 1 is a polystyrene equivalent molecular weight as measured by GPC. Specific measurement conditions are as follows.

### · Solution sending system: HLC-8120GPC (available from Tosoh Corporation)

· Column: TSK-GEL H type (available from Tosoh Corporation)
· Solvent: tetrahydrofuran

The mm-triad content of a resulting polyoxypropylene-based polymer was less than 5%. This shows that an amorphous polyoxypropylene-based resin was indeed obtained.

### [Example 1]

A cured product was produced by the following procedure.
1. A crystalline polyoxypropylene-based polymer and an amorphous polyoxypropylene-based polymer were added in a mayonnaise bottle. A reactive silicon group has been introduced into each of these polyoxypropylene-based polymers.
2. 100 parts by weight of tetrahydrofuran was added, where the total content of polyoxypropylene-based polymers was 100 parts by weight. Subsequently, a resulting mixture was mixed while being heated in an oven at 70°C.
3. The mixture was removed from the oven, and a silanol condensation catalyst and water were added. After that, a resulting mixture was stirred with a spatula, and a curable composition was poured into a mold. As a silanol condensation catalyst, dibutyltin dilaurate (NEOSTANN U-100, available from Nitto Kasei Co., Ltd.) was used.
4. Tetrahydrofuran was volatilized in an oven at 50°C. Thereafter, aging was carried out at 70°C for 20 hours to 33 hours. Thus, a cured product was obtained.

### [Comparative Example 1]

A cured product was produced by the following procedure.
1. To an amorphous polyoxyalkylene-based polymer, a silanol condensation catalyst and water were added, and a resulting mixture was stirred and poured into a mold. As a silanol condensation catalyst, dibutyltin dilaurate (NEOSTANN U-100, available from Nitto Kasei Co., Ltd.) was used.
2. Aging was carried out at 23°C under 55% constant temperature and constant humidity for 1 week. Thus, a cured product was obtained.

### [Comparative Example 2]

In Example 1, the crystalline polyoxypropylene-based polymer to be added was changed to a crystalline polyoxypropylene-based polymer without a reactive silicon group. Specifically, the crystalline polyoxypropylene-based polymer to be added was changed to the crystalline polyoxypropylene-based polymer obtained in step 2 of Synthesis Example 1. Except for this, a cured product was obtained by the same method as that in Example 1.

### [Method for measuring mechanical properties of cured product]

A type 3 dumbbell-shaped specimen specified in JIS K 7113 was punched out from a resulting sheet-shaped cured product (thickness: approximately 1 mm). The specimen was subjected to a tensile test to measure mechanical properties. Specifically, elastic moduli (stress at 50% elongation, stress at 100% elongation, and stress at break) and an elongation at break (elongation against the inter-chuck distance prior to the test) were measured. Table 1 shows results. Measurement was carried out with use of Autograph (AG-2000A, available from Shimadzu Corporation) as a measurement device at a measurement temperature of 23°C and a tensile speed of 500 mm/min.

### [Results]

Table 1 shows results.

### [Table 1]

**Table 1**

| | | Example 1 | Comparative Example 1 | Comparative Example 2 |
|---|---|---|---|---|
| Makeup (Part by weight) | Crystalline polyoxyalkylene-based polymer | 30 | | |
| | Amorphous polyoxyalkylene-based polymer | 70 | 100 | 70 |
| | Crystalline polyoxyalkylene-based polymer (without reactive silicon group) | | | 30 |
| | Silanol condensation catalyst | 2 | 2 | 2 |
| | Water | 2 | 2 | 2 |
| Tensile physical properties | Stress at 50% elongation (MPa) | 2.5 | 0.26 | -* |
| | Stress at 100% elongation (MPa) | 3.3 | 0.44 | -* |
| | Strength at break (MPa) | 4.1 | 0.60 | 1.2 |
| | Elongation at break (%) | 160 | 150 | 24 |

| | | | | |
|---|---|---|---|---|
| *Unmeasurable due to the elongation at break, which was only 24%. | | | | |

The cured product in accordance with Example 1 was obtained by curing the curable composition containing the crystalline polyoxyalkylene-based polymer having a reactive silicon group. The cured product in accordance with Comparative Example 1 was obtained by curing the curable composition without the crystalline polyoxyalkylene-based polymer. The cured product in accordance with Comparative Example 2 was obtained by curing the curable composition containing the crystalline polyoxyalkylene-based polymer without a reactive silicon group.

As a result of comparison of the results of Example 1 and Comparative Example 1, the cured product in accordance with Example 1 has greater stress at 50% elongation and greater stress at 100% elongation than the cured product in accordance with Comparative Example 1, and has higher strength in the case of the same elongation rates. Further, the cured product in accordance with Example 1 has greater stress at break than the cured product in Comparative Example 1 and does not break unless a great force is applied thereto. This suggests that adding the crystalline polyoxyalkylene-based polymer improves the elastic modulus and the strength of the cured product.

The comparison of the results of Example 1 and Comparative Example 1 suggests that an effect of addition of the crystalline polyoxyalkylene-based polymer is exhibited by the crystalline polyoxyalkylene-based polymer having a reactive silicon group.

### Industrial Applicability

A curable composition in accordance with an aspect of the present invention can be used for a sealing material, an adhesive agent, and the like.

## Claims

1. A crystalline polyoxyalkylene-based polymer (A) comprising a reactive silicon group indicated in general formula (1):
-Si(R¹)₃₋ₐ(X)ₐ (1)
where:
each R¹ independently represents a hydrocarbon group that may have a substituent, the hydrocarbon group having 1 to 20 carbon atoms;
the substituent may have a hetero atom;
each X is independently a hydroxy group or a hydrolyzable group; and
"a" is 1, 2, or 3.

2. The crystalline polyoxyalkylene-based polymer (A) as set forth in claim 1, wherein X is an alkoxy group.

3. The crystalline polyoxyalkylene-based polymer (A) as set forth in claim 2, wherein X is a methoxy group.

4. The crystalline polyoxyalkylene-based polymer (A) as set forth in claim 1, wherein the crystalline polyoxyalkylene-based polymer (A) is a polyoxypropylene-based polymer.

5. A curable composition comprising:
a crystalline polyoxyalkylene-based polymer (A) recited in claim 1; and
a silanol condensation catalyst (B).

6. The curable composition as set forth in claim 5, further comprising an amorphous polyoxyalkylene-based polymer (C) having a reactive silicon group indicated in general formula (2):
-Si(R²)_{3-b}(Y)_{b} (2)
where:
each R² independently represents a hydrocarbon group that may have a substituent, the hydrocarbon group having 1 to 20 carbon atoms;
the substituent may have a hetero atom;
each Y is independently a hydroxy group or a hydrolyzable group; and
"b" is 1, 2, or 3.

7. The curable composition as set forth in claim 6, wherein Y is an alkoxy group.

8. The curable composition as set forth in claim 7, wherein Y is a methoxy group.

9. The curable composition as set forth in claim 6, wherein the amorphous polyoxyalkylene-based polymer (C) is a polyoxypropylene-based polymer.

10. The curable composition as set forth in claim 6, wherein a weight ratio ((A)/(C)) of the crystalline polyoxyalkylene-based polymer (A) to the amorphous polyoxyalkylene-based polymer (C) is 1/99 to 99/1.

11. The curable composition as set forth in claim 5 or 6, further comprising a silane coupling agent (D).

12. A sealing material comprising a curable composition recited in claim 5 or 6.

13. An adhesive agent comprising a curable composition recited in claim 5 or 6.

14. A cured product obtained by curing a curable composition recited in claim 5 or 6.
